# EUROPEAN PATENT APPLICATION

(11) **EP 3 508 779 A1**
(43) Date of publication of application: **10.07.2019**
(21) Application number: 19150411.7
(22) Date of filing: 04.01.2019
(51) Int. Cl.: F21S 41/16, F21S 41/32, F21S 41/176

(54) **LAMP FOR VEHICLE AND VEHICLE**

(30) Priority: 05.01.2018 KR 20180001842
(71) Applicant: LG Electronics Inc., Seoul 07336 (KR)
(72) Inventor: KIM, Hyeonji, 06772 Seoul (KR); LEE, Oklyeol, 06772 Seoul (KR)
(74) Representative: Vossius & Partner Patentanwälte Rechtsanwälte mbB

(57) **Abstract**

Disclosed is a lamp for a vehicle, including: a light output device configured to emit visible light based on laser light; and a light sensing device configured to sense the light, wherein the light sensing device comprises: a filter configured to separate light according to wavelengths, and an optical sensor configured to sense the light separated by the filter.

## Description

### CROSS-REFERENCE TO RELATED APPLICATION

This application claims the priority benefit of Korean Patent Application No. 10-2018-0001842, filed on January 5, 2018 in the Korean Intellectual Property Office, the disclosure of which is incorporated herein by reference.

### BACKGROUND OF THE INVENTION

### 1. Field of the invention

The present invention relates to a lamp for a vehicle, and the vehicle.

### 2. Description of the Related Art

A vehicle is an apparatus that moves in a direction desired by a user riding therein. A representative example of vehicle may be an automobile. The vehicle includes a lamp.

Such a lamp included in the vehicle may be classified as a lamp for securing visibility for a driver (e.g., a head lamp and a fog lamp), or a lamp for notifying a simple signal (e.g., a rear combination lamp).

Various devices may be used as light sources of the lamps provided in a vehicle.

Recently, there have been efforts to utilize a laser diode as a light source of a lamp for vehicle.

A laser diode provides a sufficient amount of light required for a lamp for vehicle. However, if light generated by the laser diode is irradiated directly to a human, it may cause dangerous problems.

### SUMMARY OF THE INVENTION

The present invention has been made in view of the above problems, and it is one object of the present invention to provide a lamp for a vehicle, which employs a laser light and has a safety system.

It is another object of the present invention to provide a vehicle including the lamp.

Objects of the present invention should not be limited to the aforementioned objects and other unmentioned objects will be clearly understood by those skilled in the art from the following description.

In accordance with an embodiment of the present invention, the above and other objects can be accomplished by the provision of a lamp for a vehicle, including: a light output device configured to emit visible light based on laser light; and a light sensing device configured to sense the light, wherein the light sensing device comprises: a filter configured to separate light according to wavelengths, and an optical sensor configured to sense the light separated by the filter.

The details of other embodiments are included in the following description and the accompanying drawings.

The embodiments of the present invention have one or more effects as follows.

First, using a laser light, it is possible to secure an amount of light required for a lamp for a vehicle.

Second, by applying a 3-path structure, it is possible to make a lamp for a vehicle slimmer.

Third, using a safety system, it is possible to use a laser light safely.

Third, safety may be achieved even in an unexpected situation, such as a car accident.

Effects of the present invention should not be limited to the aforementioned effects and other unmentioned effects will be clearly understood by those skilled in the art from the claims.

### BRIEF DESCRIPTION OF THE DRAWINGS

The embodiments will be described in detail with reference to the following drawings in which like reference numerals refer to like elements wherein:
FIG. 1 shows an example of a vehicle according to an embodiment of the present invention;
FIG. 2 is a block diagram illustrating a lamp for a vehicle according to an embodiment of the present invention;
FIG. 3 is an example of a perspective view of a lamp for a vehicle according to an embodiment of the present invention;
FIG. 4 is an example of a front view of a lamp for a vehicle according to an embodiment of the present invention;
FIG. 5 is an example of a side view of a lamp for a vehicle according to an embodiment of the present invention;
FIG. 6 is an example of a plan view of a lamp for a vehicle according to an embodiment of the present invention;
FIG. 7 is an example of a light sensing device, as viewed from a view point A shown in FIG. 3;
FIG. 8 is an example of a schematic configuration view of a lamp for a vehicle according to an embodiment of the present invention;
FIG. 9 is an example of a configuration view illustrating an optical path in a lamp for a vehicle according to an embodiment of the present invention;
FIG. 10 is an example of a plan view of a lamp for a vehicle according to an embodiment of the present invention;
FIG. 11 is an example of a side view of a lamp for a vehicle according to an embodiment of the present invention;
FIG. 12 is an example of a perspective view of a lamp for a vehicle according to an embodiment of the present invention; and
FIG. 13 is an example of a side sectional view of a lamp for a vehicle according to an embodiment of the present invention.

### DETAILED DESCRIPTION OF THE EMBODIMENTS

Hereinafter, the embodiments disclosed in the present specification will be described in detail with reference to the accompanying drawings, and the same or similar elements are denoted by the same reference numerals even though they are depicted in different drawings and redundant descriptions thereof will be omitted. In the following description, with respect to constituent elements used in the following description, the suffixes "module" and "unit" are used or combined with each other only in consideration of ease in the preparation of the specification, and do not have or serve as different meanings. Accordingly, the suffixes "module" and "unit" may be interchanged with each other. In addition, in the following description of the embodiments disclosed in the present specification, a detailed description of known functions and configurations incorporated herein will be omitted when it may make the subject matter of the embodiments disclosed in the present specification rather unclear. In addition, the accompanying drawings are provided only for a better understanding of the embodiments disclosed in the present specification and are not intended to limit the technical ideas disclosed in the present specification. Therefore, it should be understood that the accompanying drawings include all modifications, equivalents and substitutions included in the scope and sprit of the present invention.

It will be understood that although the terms "first," "second," etc., may be used herein to describe various components, these components should not be limited by these terms. These terms are only used to distinguish one component from another component.

It will be understood that when a component is referred to as being "connected to" or "coupled to" another component, it may be directly connected to or coupled to another component or intervening components may be present. In contrast, when a component is referred to as being "directly connected to" or "directly coupled to" another component, there are no intervening components present.

As used herein, the singular form is intended to include the plural forms as well, unless the context clearly indicates otherwise.

In the present application, it will be further understood that the terms "comprises", includes," etc. specify the presence of stated features, integers, steps, operations, elements, components, or combinations thereof, but do not preclude the presence or addition of one or more other features, integers, steps, operations, elements, components, or combinations thereof.

A vehicle as described in this specification may include an automobile and a motorcycle. Hereinafter, a description will be given based on an automobile.

A vehicle as described in this specification may include all of an internal combustion engine vehicle including an engine as a power source, a hybrid vehicle including both an engine and an electric motor as a power source, and an electric vehicle including an electric motor as a power source.

In the following description, "the left side of the vehicle" refers to the left side in the forward driving direction of the vehicle, and "the right side of the vehicle" refers to the right side in the forward driving direction of the vehicle.

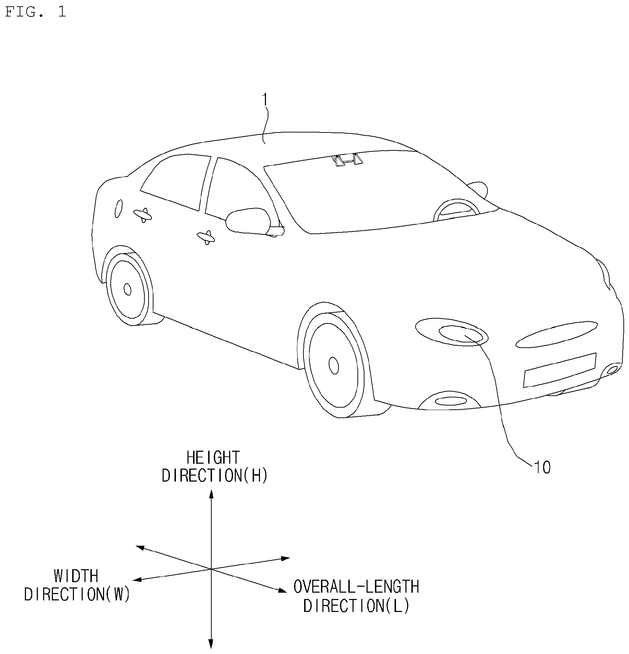

FIG. 1 shows an example of a vehicle according to an embodiment of the present invention.

A vehicle 1 may include a wheel able to be rotated by a power source, and a steering input device for adjusting a direction of travel of the vehicle 1.

The vehicle 1 may be an autonomous vehicle.

The vehicle 1 may include a lamp 10.

The lamp 10 may include at least one of the following: a head lamp, a rear combination lamp, a fog lamp, a room lamp, a turn signal lamp, a daytime running lamp, a back lamp, a positioning lamp, etc.

In the following description, a head lamp will be described as an example of the lamp 10.

Meanwhile, the term "overall length" means the length from the front end to the rear end of the vehicle 1, the term "overall width" means the width of the vehicle 1, and the term "overall height" means the height from the bottom of the wheel to the roof. In the following description, the term "overall length direction L" may mean the reference direction for the measurement of the overall length of the vehicle 1, the term "overall width direction W" may mean the reference direction for the measurement of the overall width of the vehicle 1, and the term "overall height direction H" may mean the reference direction for the measurement of the overall height of the vehicle 1.

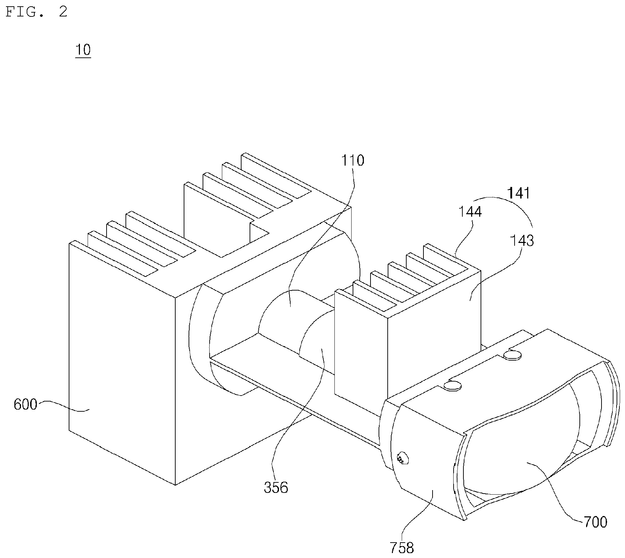

FIG. 2 shows an example of a lamp for a vehicle according to an embodiment of the present invention.

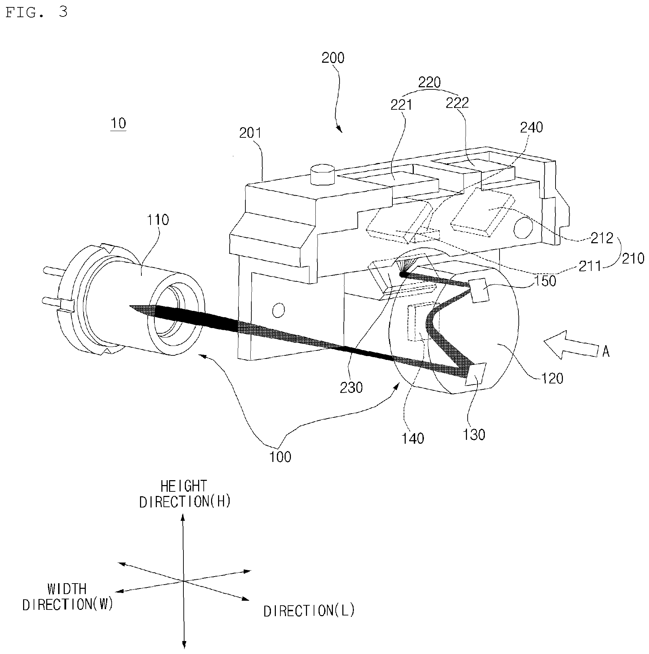

FIG. 3 is an example of a perspective view of a lamp for a vehicle according to an embodiment of the present invention.

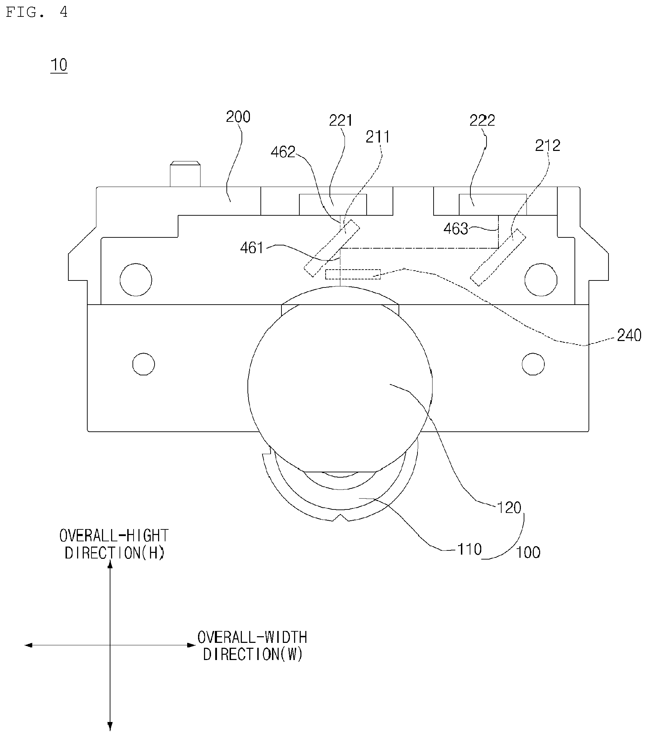

FIG. 4 is an example of a front view of a lamp for a vehicle according to an embodiment of the present invention.

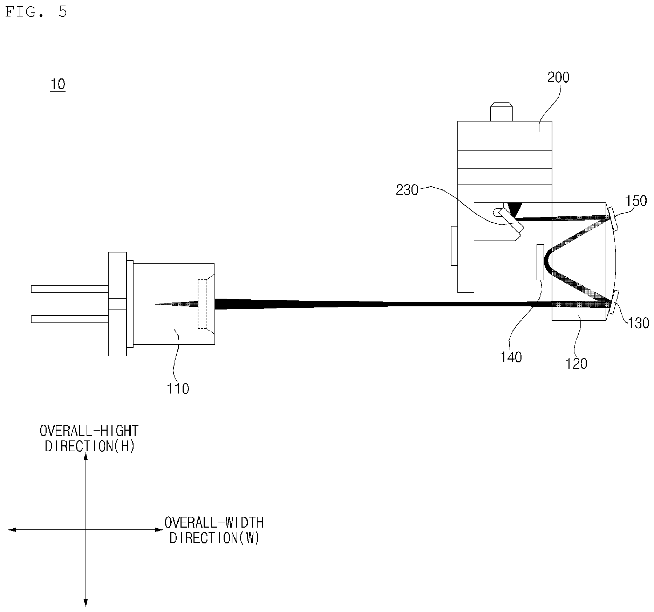

FIG. 5 is an example of a side view of a lamp for a vehicle according to an embodiment of the present invention.

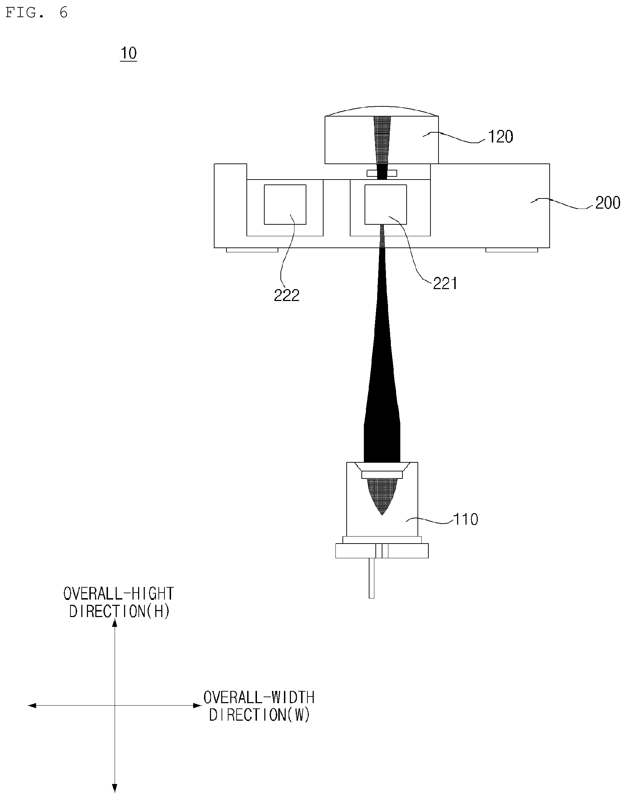

FIG. 6 is an example of a plan view of a lamp for a vehicle according to an embodiment of the present invention.

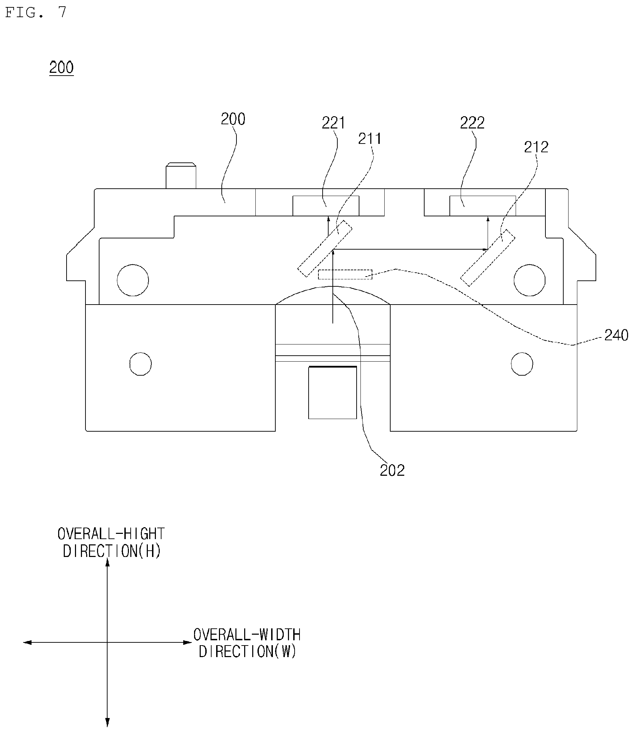

FIG. 7 is an example of a light sensing device, as viewed from a view point A shown in FIG. 3.

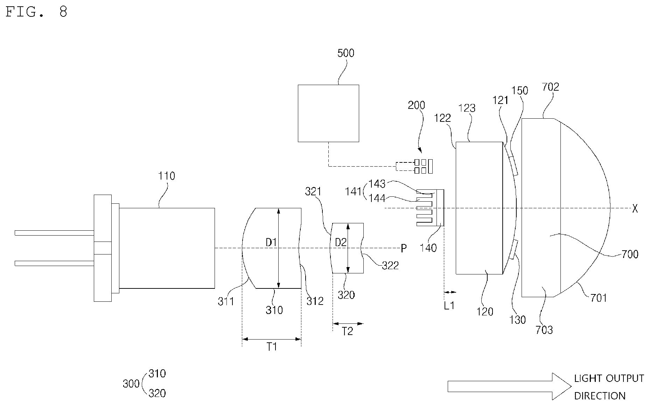

FIG. 8 is an example of a schematic configuration view of a lamp for a vehicle according to an embodiment of the present invention.

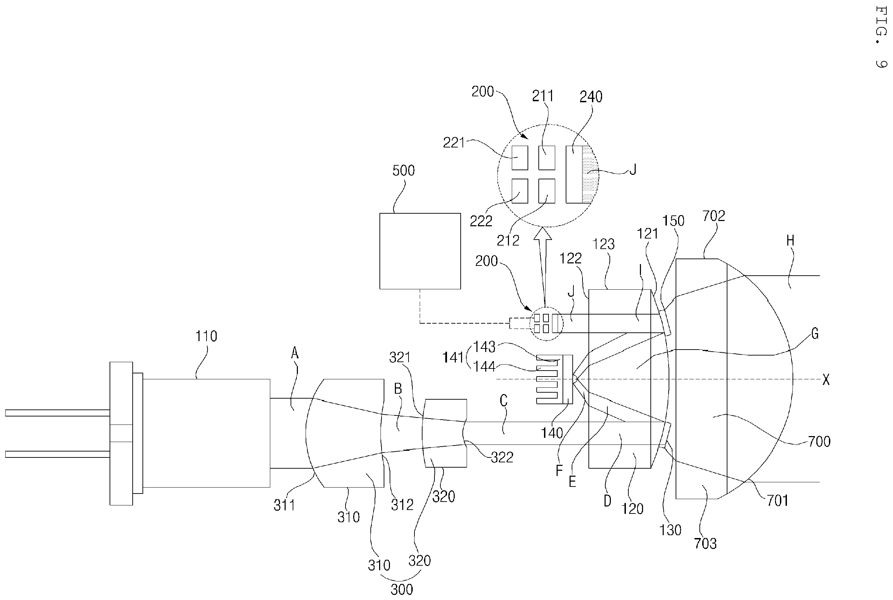

FIG. 9 is an example of a configuration view illustrating an optical path in a lamp for a vehicle according to an embodiment of the present invention.

Referring to FIGS. 2 to 9, the lamp 10 may include a light output device 100 and a light sensing device 200.

The light output device 100 may generate light and emit the generated light.

For example, the light output device 100 may generate visible light based on laser light, and emit the generated light.

The light output device 100 may include a light source 110, a lens 120, a first reflection unit 130, a reflective phosphor 140, and a second reflection unit 150.

The light source 110 may be supplied with electrical energy and convert the electrical energy into light energy.

The light device 110 may generate laser light and emit the laser light.

For example, the light source 110 may generate blue-based laser light and emit the blue-based laser light.

The light source 110 may include a laser diode (LD).

The light source 110 may emit light toward a lens 120.

The light output from the light source 110 may pass through the lens 120 and be then incident on the first reflection unit 130.

The light source 110 may emit light toward the lens 120.

The light source 110 may be disposed eccentric to an optical axis X of the lens 120.

The light device 110 may emit light toward a portion of the lens 120 out of the center of the lens. For example, the light source 110 may emit light in a direction toward a portion of the lens 120 lower than the center of the lens 120.

Meanwhile, in the case where the lamp 10 further includes a light reducer 300, the light source 110 may emit light toward the light reducer 300.

Light incident from the light source 110 into a rear surface 122 of the lens 120 may pass through the lens 120 and be then incident on the first reflection unit 130.

Meanwhile, the lamp 10 may further include a heat dissipation member 600 that dissipates heat generated by the light source 110.

The heat dissipation member 600 may include a contact plate, which is in contact with the light source 110, and a dissipation fin, which protrudes from the contact plate.

In some embodiments, the light output device 100 may further include the light reducer 300.

The light reducer 300 may shrink laser light output from the light source 110 and emit the shrunk light to the first reflection unit 130.

The light reducer 300 may reduce a width of incident light and emit the width-reduced light.

The light reducer 300 may reduce a size of light to be output from the light source 110.

For example, the light reducer 300 may reduce the size of a cross-sectional area of light to be output from the light source 110.

The light reducer 300 may emit incident light toward the first reflection unit 130.

Light output from the light source 110 may pass through the light reducer 300 and the lens 120, and be then incident on the first reflection unit 130.

The light reducer 300 may be disposed between the light source 110 and the lens 120.

For example, the light reducer 300 may be disposed between the front surface of the light source 110 and the rear surface 122 of the lens 120.

The light reducer 300 may be disposed to be spaced apart from each of the light source 110 and the lens 120.

The light reducer 300 may be disposed to be spaced apart from the optical axis X of the lens 120.

The light reducer 300 may be positioned on the optical axis X of the lens 120, but the optical axis P of the light reducer 300 may be spaced apart from the optical axis X of the lens 120.

Meanwhile, the optical axis P of the light reducer 300 may be parallel to the optical axis X of the lens 120.

The light reducer 300 may be disposed behind the lens 120 to emit light in a direction parallel to the optical axis X of the lens 120.

The light reducer 300 may include a first reducer lens 310 and a second reducer lens 320.

The first reducer lens 310 may reduce a width of light output from the light source 110.

The first reducer lens 310 may include a light-incident surface 311 and a light-emitting surface 312.

The light-incident surface 311 of the first reducer lens 310 may face the light source 110.

The light-emitting surface 312 of the first reducer lens 310 may face a light-incident surface 321 of the second reducer lens 320.

The first reducer lens 310 may be disposed between the light source 110 and the second reducer lens 320.

The second reducer lens 320 may reduce a width of light emitted from the first reducer lens 310.

The second reducer lens 320 may include a light-incident surface 321 and a light-emitting surface 322.

The light-incident surface 321 of the second reducer lens 320 may face the light-emitting surface 312 of the first reducer lens 310.

The light-emitting surface 322 of the second reducer lens 320 may face the rear surface 122 of the lens 120.

The second reducer lens 320 may be spaced apart from the first reducer lens 310.

The light-emitting surface 312 of the first reducer lens 310 and the light-incident surface 321 of the second reducer lens 320 may be spaced apart from each other.

For example, the first reducer lens 310 and the second reducer lens 320 may be spaced apart from each other in a direction parallel to the optical axis X of the lens 120.

For example, the first reducer lens 310 and the second reducer lens 320 may be spaced apart from each other with air therebetween.

For example, the first reducer lens 310 and the second reducer lens 320 may be spaced apart from each other in the overall length direction.

The second reducer lens 320 may be disposed between the first reducer lens 310 and the lens 120.

The optical axis of the first reducer lens 310 may coincide with the optical axis of the second reducer lens 320.

The respective light-incident surfaces 311 and 321 of the first reducer lens 310 and the second reducer lens 320 may be convex toward the light source 110.

The respective light-emitting surfaces 312 and 322 of the first reducer lens 310 and the second reducer lens 320 may be concave toward the light source 110.

A diameter D2 of the second reducer lens 320 may be smaller than a diameter D1 of the first reducer lens 310.

A thickness T2 of the second reducer lens 320 may be thinner than a thickness T1 of the first reducer lens 310.

As light is primarily shrunk at the first reducer lens 310, the second reducer lens 320 may be formed smaller than the first reducer lens 310 to improve utilization of an ambient space.

The light-incident surface 311 of the first reducer lens 310 and the light-incident surface 321 of the second reducer lens 320 may have the same curvature or different curvatures.

A degree of reduction in width of light passing through the first reducer lens 310 may be highly dependent on the curvature of the light-incident surface 311 of the first reducer lens 310. As the curvature of the light-incident surface 311 of the first reducer lens 310 increases, the degree of reduction in width of light passing through the first reducer lens 310 may increase as well.

That is, as the curvature of the light-incident surface 311 of the first reducer lens 310 increases, the second reducer lens 320, the first reflection unit 130, and the lens 130 may be reduced more in size.

The light whose width is primarily reduced at the first reducer lens 310 may be incident on the light-incident surface 321 of the second reducer lens 25, and it is desirable that the light-incident surface 321 of the second reducer lens 320 is formed not to shrink light excessively.

In the case where the light-incident surface 311 of the first reducer lens 310 and the light-incident surface 321 of the second reducer lens 320 have different curvatures, it is desirable that a curvature of the light-incident surface 311 of the first reducer lens 310 is greater than a curvature of the light-incident surface 321 of the second reducer lens 320.

The light-emitting surface 312 of the first reducer lens 310 and the light-emitting surface 322 of the second reducer lens 320 may have the same curvature or different curvatures.

The first reducer lens 310 may emit light with a different width depending on a curvature of the light-emitting surface 312 thereof.

The light-emitting surface 312 of the first reducer lens 310 may have a curvature at which light having passed through the light-emitting surface 312 is emitted in a direction parallel to the optical axis X of the lens 120. The light-emitting surface 312 of the first reducer lens 310 may have a curvature at which light having passed through the light-emitting surface 312 is gradually reduced in width when traveling between the light-emitting surface 312 of the first reducer lens 310 and the light-incident surface 321 of the second reducer lens 320.

Depending of a curvature of the light-emitting surface 322 of the second reducer lens 320, light may be incident from the second reducer lens 320 on the first reflection unit 130 with a different width. It is desirable that the light-emitting surface 322 is formed so as to allow light to be incident on the first reflection unit 130 in a direction parallel to the optical axis X of the lens 120.

In the case where the light-emitting surface 312 of the first reducer 310 and the light-emitting surface 322 of the second reducer lens 320 have different curvatures, it is desirable that a curvature of the light-emitting surface 322 of the second reducer lens 320 is greater than a curvature of the light-emitting surface 312 of the first reducer lens 310.

The lens 120 may change an optical path of an incident light.

The lens 120 may be formed greater than each of the reflective phosphor 140, the first reflection unit 130, and the second reflection unit 150.

As being disposed in front of the reflective phosphor 140, the lens 120 may project the reflective phosphor 140.

The lens 120 may include a front surface 121, a rear surface 122, a circumferential surface 123.

The lens 120 may be a condenser lens.

The front surface 121 of the lens 120 may have a convex curved surface toward a direction in which light is output from the lamp 10.

The front surface 121 of the lens 120 may have a convex curved surface toward a straight-forward direction of travel of the vehicle 1.

The rear surface 122 of the lens 120 may be flat.

The rear surface 122 of the lens 120 may have a concave curved surface toward a direction in which light is output from the lamp 10.

The lens 120 may have the optical axis X.

The lens 120 may be symmetric about the optical axis X. The optical axis X of the lens 120 may be a rotational symmetrical axis or a center axis of the lens 120.

The optical axis X of the lens 120 may be defined as a straight line which passes through the center of the front surface 121 and the rear surface 122 of the lens 120.

The first reflection unit 130 and the second reflection unit 150 may come into contact with the front surface 121 of the lens 120. In this case, the first reflection unit 130 and the second reflection unit 150 of the lens 120 may be integrally formed with each other.

In some implementations, the first reflection unit 130 and the second reflection unit 150 may be disposed inside the lens 120.

Through double injection molding, it is possible to make the lens 120 having the first reflection unit 130 and the second reflection unit 150 formed therein.

For example, the first reflection unit 130 and the second reflection unit 150 may come into contact with the front surface 121 of the lens 120 to be vertically symmetric to each other about the optical axis X of the lens 120.

The first reflection unit 130 may reflect incident light toward the reflective phosphor 140.

The first reflection unit 130 may reflect laser light, having been output from the light source 110, toward the rear of the lens 120.

The light reflected by the first reflection unit 130 may pass through the lens 120 and be then incident on the reflective phosphor 140.

The first reflection unit 130 may be integrally formed with the lens 120.

For example, the first reflection unit 130 may come into contact with the front surface 122 of the lens 120.

For example, the first reflection unit 130 may be formed inside the lens 120.

In some implementations, the first reflection unit 130 may be disposed to be spaced apart from the lens 120.

The position of the first reflection unit 130 may depend on where the reflective phosphor 140 is disposed.

For example, in the case where the reflective phosphor is disposed behind the lens 120, the first reflection unit 130 may be disposed behind the lens 120 to be spaced apart from the lens 120, the first reflection unit 130 may be disposed on the rear surface 122 of the lens 120, the first reflection unit 130 may be disposed on the front surface of the lens 120, or the first reflection unit 130 may be disposed in front of the lens 120 to be spaced apart from the lens 120.

In some implementations, when disposed behind the lens 120 to be spaced apart from the lens 120, the first reflection unit 130 may reflect light, having been output from the light source 110, toward between the reflective phosphor 140 and the lens 120.

In some implementations, when integrally formed with the rear surface 122 of the lens 120, the first reflection unit 130 may reflect light, having been output from the light source 110, toward between the reflective phosphor 140 and the lens 120.

In some implementations, when integrally formed with the front surface of the lens 120, the first reflection unit 130 may reflect light, having been emitted by the light source 110 and having passed through the lens 120, toward the lens 120 so that the light is reflected toward the reflective phosphor 140.

In some implementations, as the first reflection unit 130 is disposed in front of the lens 120 to be spaced apart from the lens 120, the first reflection unit 130 may reflect light, having been output from the light source 110 and having passed through the lens 120, toward the lens 120 so that the light is reflected toward the reflective phosphor 140.

In the case where the first reflection unit 130 is disposed behind or in front of the lens 120 to be spaced apart from the lens 120, the number of components of a lighting device for a vehicle may be increased and the size of the lighting device may be increased due to a distance between the lens 120 and the first reflection unit 130.

It is desirable that the first reflection unit 130 is integrally formed with the rear surface 122 or the front surface 121 of the lens 120 in order to minimize the number of components of the lighting device and make the lighting device compact.

In the case where the first reflection unit 130 is provided over the entire rear surface or the entire front surface of the lens 120, the first reflection unit 130 may reflect light, having been reflected by the reflective phosphor 140, in a rearward direction, and thus, the light reflected by the reflective phosphor 140 is not allowed to be emitted toward the front of the lens 120.

That is, it is desirable that the first reflection unit 130 is provided on part of the rear surface 122 or the front surface 121 of the lens 120.

It is desirable that the first reflection unit 130 has a size large enough to allow the lens 120 to secure a sufficient light emission area.

It is desirable that the first reflection unit 130 is disposed off of the optical axis X of the lens 120.

It is desirable that the first reflection unit 130 is disposed between the optical axis X of the lens 120 and the circumferential surface 123 of the lens 120.

The first reflection unit 130 may be provided on a partial area of the rear surface 122 or the front surface 121 of the lens 120.

The first reflection unit 130 may be provided to reflect light, having been output from the light source 110, toward the reflective phosphor 140.

The first reflection unit 130 may reflect incident light toward the rear of the lens 120.

It is desirable that the position of the first reflection unit 130 is determined by taking into consideration a distance between the reflective phosphor 140 and the lens 120.

It is desirable that the reflective phosphor 140 is disposed close to the rear surface 122 of the lens 120, and thus, it is desirable that the first reflection unit 130 is provided on the front surface 121 of the lens 120.

That is, the first reflection unit 130 may be provided on a partial area of the front surface 121 of the lens 120, and especially the light output from the light reducer 300 may pass through the lens 120 and be then incident on the first reflection unit 130. Next, light reflected by the first reflection unit 130 may pass through the lens 120 and be then incident on the reflective phosphor 140, and light whose wavelength is converted by the reflective phosphor 140 may pass through the lens 120 and be then emitted to the front of the lens 120. The lens 120 may be a 3-path lens through which light passes three times, and the lighting device for a vehicle may be made compact due to the 3-path lens.

The first reflection unit 130 may be formed in part of the convex front surface 121 of the lens 120 along the convex front surface 121 of the lens 120 to have an arc-shaped cross-section. When viewed from the front of the lens 120, the first reflection unit 130 may have a circular or polygonal shape.

The first reflection unit 130 may be a concave mirror formed on the front surface 121 of the lens 120. The first reflection unit 130 may have a convex front surface and a concave rear surface.

The front surface of the first reflection unit 130 may face a projection lens 700 which will be described later, and the first reflection unit 130 may be disposed between the lens 120 and the projection lens 700 to be protected by the lens 120 and the projection lens 700.

The first reflection unit 130 may be a reflective coating layer, which is off of the optical axis X of the lens 120 and coated on the front surface 121 of the lens 120. Alternatively, the first reflection unit 130 may be a reflective sheet, which is off of the optical axis X of the lens 120 and attached to the front surface 121 of the lens 120.

The light source 110, the light reducer 300, and the first reflection unit 130 may be positioned along a straight line, as viewed from above or from one side.

The reflective phosphor 140 may be disposed behind the lens 120.

The reflective phosphor 140 may convert a wavelength of light reflected by the first reflection unit 130, and reflect the wavelength-converted light toward the lens 120.

Since heat is possibly generated during conversion of a wavelength of light, it is desirable that the reflective phosphor 140 is spaced apart from the lens 120. The reflective phosphor 140 may be disposed behind the lens 120 to be spaced apart from the lens 120.

The reflective phosphor 140 may be disposed to face the rear surface 122 of the lens 120, and reflect light toward the rear surface 122 of the lens 120.

The reflective phosphor 140 may be disposed to be spaced apart from the rear surface 122 of the lens 120, while being on the optical axis X of the lens 120.

The front surface of the reflective phosphor 140 may be parallel to the rear surface 122 of the lens 120.

The reflective phosphor 140 may be off of the optical axis X of the lens 120 and eccentric to the optical axis X of the lens 120.

It is desirable that the reflective phosphor 140 is disposed on the optical axis X of the lens 120.

The reflective phosphor 140 may include a wavelength conversion layer, which faces the rear surface 122 of the lens 120, and a reflection unit, which is disposed behind the wavelength conversion layer.

The wavelength conversion layer may be implemented as a wavelength conversion film and may include an Opto ceramic.

The wavelength conversion layer may be disposed in front of the reflection unit and convert a wavelength of light reflected by the first reflection unit 130.

The wavelength conversion layer may be a wavelength converting film that converts blue-based light into yellow-based light.

The wavelength conversion layer may include an Opto ceramic.

The reflection unit may include a plate and a reflective coating layer, which is coated on the outer surface of the plate. The plate may be made of metal. The reflection unit may support the wavelength conversion layer, and light having passed through the wavelength conversion layer may be reflected by the reflection unit toward the rear surface 122 of the lens 120.

When blue-based light is reflected by the first reflection unit 130 toward the reflective phosphor 140, part of the blue-based light is reflected from a surface of the wavelength conversion layer. In this case, the blue-based light incident on the wavelength conversion layer may be excited in the wavelength conversion layer and reflected by the reflection unit toward the front of the wavelength conversion layer.

The blue-based light reflected from the surface of the wavelength conversion layer and the yellow-based light emitted to the front of the wavelength conversion layer may be mixed together. White-based light may be emitted to the front of the reflective phosphor 140, and this white-based light may pass through the lens 120 and be then emitted to the front of the lens 120.

A distance L1 between the reflective phosphor 140 and the lens 120 may determine an overall width of the lighting device for a vehicle. It is desirable that the reflective phosphor 140 is disposed close to the lens 120 within a range where heat damage to the lens 120 can be minimized.

A heat dissipation member 141 for assisting heat dissipation of the reflective phosphor 140 may be disposed in the reflective phosphor 140. The heat dissipation member 141 may include a contact plate 143, which comes into contact with the reflective phosphor 140, and a heat dissipation fin 144, which protrudes from the contact plate 143.

The contact plate 143 may be attached to the rear surface of the reflection unit.

The lighting device for a vehicle may further include a projection lens 700 disposed in front of the lens 120. The projection lens 700 may be greater in size than the lens 120. The optical axis of the projection lens 700 may coincide with the optical axis X of the lens 120.

Meanwhile, white-based light emitted from the reflective phosphor 140 may be output to the outside of the vehicle.

The white-based light output to the outside of the vehicle may be implemented as a low beam or a high beam from a head lamp.

Meanwhile, part of the while-based light emitted from the reflective phosphor 140 may travel toward the second reflection unit 150.

The second reflection unit 150 may reflect part of light, having been reflected by the reflective phosphor 140, toward the rear of the lens 120.

The light reflected by the second reflection unit 150 may pass through the lens 120 and be then incident on the light sensing device 200.

For example, the second reflection unit 150 may reflect incident light toward the light sensing device 200 in a direction parallel to the optical axis X of the lens 120.

The light reflected by the second reflection unit 150 toward the light sensing device 200 may be sensed by the light sensing device 200. Depending on a sensing result, safety of the lighting device for a vehicle may be judged.

The second reflection unit 150 may be integrally formed with the lens 120.

For example, the second reflection unit 150 may come into contact with the front surface 122 of the lens 120.

For example, the second reflection unit 150 may be formed inside the lens 120.

In some implementations, the second reflection unit 150 may be disposed to be spaced apart from the lens 120.

The position of the second reflection unit 150 may depend on where the light sensing device 200 is disposed.

For example, the second reflection unit 150 may be disposed to reflect light toward a mirror 230 of the light sensing device 200.

The second reflection unit 150 may be disposed on the front surface 121 of the lens 120 to be spaced apart from the first reflection unit 130, so that the second reflection unit 150 reflects light, having been reflected by the reflective phosphor 140, toward the rear of the lens 120.

The second reflection unit 150 may be provided on the front surface 121 of the lens 120.

The second reflection unit 150 may be formed on a convex front surface 121 of the lens 120 to have an arc-shaped cross-section.

The second reflection unit 150 may be an concave mirror formed on the convex front surface 121 of the lens 120 along the front surface 121 of the lens 120.

The first reflection unit 130 and the second reflection unit 150 may be spaced apart from each other. The first reflection unit 130 and the second reflection unit 150 may be symmetrical to each other with respect to the optical axis X of the lens 120.

The first reflection unit 130 and the second reflection unit 150 may be disposed on the front surface 31 of the lens to be symmetrical to each other with a 180° phase difference. In the case where the first reflection unit 130 is formed in the left region of the front surface 121 of the lens 120, the second reflection unit 150 may be formed in the right region of the front surface 121 of the lens 120. In the case where the first reflection unit 130 is formed in the upper region of the front surface 121 of the lens 120, the second reflection unit 150 may be formed in the lower region of the front surface 121 of the lens120.

The first reflection unit 130 and the second reflection unit 150 may be disposed at the same distance from the optical axis X of the lens 120 or may be disposed at different distances from the optical axis X of the lens 120.

In the case where the first reflection unit 130 and the second reflection unit 150 are disposed at the same distance from the optical axis X of the lens 120, one of these two reflection units may function as the first reflection unit 130 and the other thereof may function as the second reflection unit 150.

A first distance between the first reflection unit 130 and the optical axis X of the lens 120 may be shorter or longer than a second distance between the second reflection unit 150 and the optical axis X of the lens 120. In this case, the light source 110 may be at a position where the light source 110 faces one of those two reflection units and where it is possible to make the lighting device for a vehicle compact or maximize efficiency of the lighting device.

In the case where the light source 110 faces one of the two reflection units, a reflection unit faced by the light source 110 may function as the first reflection unit, and a reflection unit not faced by the light source 110 may function as the second reflection unit 150.

The second reflection unit 150 may be a reflective coating layer which is off of the optical axis X of the lens 120 and coated on the front surface 121 of the lens 120. Alternatively, the second reflection unit 150 may be a reflective sheet which is off of the optical axis X of the lens 120 and attached to the front surface 121 of the lens 120.

Part of light reflected by the reflective phosphor 140 toward the lens 120 may be incident on the second reflection unit 150.

The light incident on the second reflection unit 150 from the reflective phosphor 140 may be reflected by the second reflection unit 150 toward the rear of the lens 120.

The light reflected by the second reflection unit 150 toward the rear of the lens 120 may pass through the rear surface 122 of the lens 120, and the light, having been reflected by the second reflection unit 150 and having passed through the rear surface 122 of the lens 120, may travel toward the light sensing device 200 of the lens 120.

The light sensing device 200 may be disposed behind the lens 120.

The light sensing device 200 may be disposed behind the second reflection unit 150.

The light sensing device 200 may be disposed above the second reflection unit 150.

As the light sensing device 200 is disposed behind the lens 120 or the second reflection unit 150, the light sensing device 200 occupies a less volume in the lamp 10. Accordingly, design freedom of the lamp 10 and other periphery components may improve.

The light sensing device 200 may be disposed between the light source 110 and the lens 120.

The light sensing device 200 may sense light output from the light output device 100.

For example, the light sensing device 200 may sense light which has been output from the light source 110 and has passed through the lens 120, the first reflection unit 130, the reflective phosphor 140, and the second reflection unit 150.

The light sensing device 200 may be spaced apart from the optical axis X of the lens 120.

It is desirable that the light sensing device 200 is disposed to avoid intervention by the reflective phosphor 140.

The light sensing device 200 may include a structure 201, a filter 210, an optical sensor 220, a mirror 230, and a diffuser 240.

The structure 201 may fix the filter 210, the optical sensor 220, the mirror 230, and a diffuser 240.

The structure 201 may allow the filter 210, the optical sensor 220, the mirror 230, and the diffuser 240 to be maintained in their right position.

The filter 210 may separate a visible light according to wavelengths.

The filter 210 may separate light, having been reflected by the second reflection unit 150, according to wavelengths.

The filter 210 may separate the visible light reflected by the second reflection unit 150 into first light of a first wavelength and second light of a second wavelength.

For example, the filter 210 may separate white-based light reflected by the second reflection unit 150 into yellow-based light and blue-based light. The yellow-based light may be incident on the optical sensor 220 along a first optical path. The blue-based light may be incident on the optical sensor 220 along a second optical path.

The filter 210 may include a first filter 211 and a second filter 212.

The first filter 211 may separate the first light of the first wavelength from the visible light. The first filter 211 may allow the first light to pass therethrough, thereby guiding the first light to a first optical sensor 220. The first filter 211 may reflect the second light, thereby guiding the second light to the second filter 212.

For example, the first filter 211 may separate yellow-based light from white-based light. The first filter 211 may provide the separated yellow-based light to the first optical sensor 221.

The first filter 211 may include a dichroic filter.

The first filter 211 may be disposed to face the second filter 212.

The first filter 211 may be disposed to be tilted at the same angle as the second filter 212 is tilted.

The second filter 212 may separate the second light of the second wavelength from the visible light. The second filter 212 may guide the second light to the first optical sensor 220.

For example, the second filter 212 may separate blue-based light from white-based visible light. The second filter 212 may provide the separated blue-based light to a second optical sensor 222.

The second filter 212 may include a dichroic filter.

The second filter 212 may be disposed to face the first filter 211.

The second filter 212 may be disposed to be tilted at the same angle as the first filter 211 is tilted.

Due to the above-described arrangement of the first and second filters 211 and 212, an optical path of blue-based light becomes longer.

Due to the above-described arrangement of the first and second filters 211 and 212, it is possible to make the lamp 10 compact.

The optical sensor 220 may sense light separated by the filter 210.

The optical sensor 220 may convert light energy into electrical energy.

The optical sensor 220 may include a first optical sensor 221 and a second optical sensor 222.

The first optical sensor 221 may sense first light separated by the first filter 211.

For example, the first optical sensor 221 may output data about intensity of the first light in the form of an electrical signal.

The data about intensity of the first light may be referred to as a sensing value of the first optical sensor 221.

The first optical sensor 221 may include a photodiode (PD) .

Referring to FIG. 4, the first optical sensor 221 may be arranged along a line 462 extending from an optical path 461 of a visible light.

For example, the first optical sensor 221 may be arranged along the line 462 extending from the optical path 461, the line 462 which is formed as visible light reflected by the second reflection unit 150 is reflected by the mirror 230.

The second optical sensor 222 may sense the second light separated by the second filter 212.

For example, the second optical sensor 222 may output data about intensity of the second light in the form of an electrical signal.

The data about intensity of the second light may be referred to as a sensing value of the second optical sensor 222.

The second optical sensor 222 may include a photodiode (PD) .

Referring to FIG. 4, the second optical sensor 222 may be arranged along a line 463 parallel to the optical path 461 of visible light.

For example, the second optical sensor 222 may be arranged along the line 463 which is formed as visible light reflected by the second reflection unit 150 is reflected by the mirror 230.

The second optical sensor 222 may be disposed on the left or right side of the first optical sensor 221.

For example, in the case where the lamp 10 is a head lamp, the second optical sensor 222 may be disposed on the left side or the right side of the first optical sensor 222 in a direction of forward travel of the vehicle.

The second optical sensor 222 may be disposed in front of or behind the first optical sensor 221.

For example, in the case where the lamp 10 is a head lamp, the second optical sensor 222 may be disposed in front of or behind the first optical sensor 221 in a straight-forward direction of travel of the vehicle.

Due to the above-described arrangement of the first and second optical sensors 221 and 222, an optical path of blue-based light becomes longer.

In the case where the optical sensor 220 senses blue-based light, if intensity per unit area of the light is equal to or greater than a reference value, the optical sensor 220 always outputs the maximum value and thus an appropriate sensing value is not output. In this case, the blue-based light always exceeds the reference value and therefore sensing is not performed properly.

According to the present invention, if the optical path of blue-based light becomes longer, intensity per unit area of the blue-based light is reduced and therefore it is possible to output data about the intensity of the blue-based light within an output range of the optical sensor 220.

Due to the above-described arrangement of the first and second optical sensors 221 and 222, the lamp 10 may be made compact.

The optical sensor 220 may provide data to a processor 500.

The mirror 230 may reflect visible light toward the filter 210.

The mirror 230 may reflect white-based visible light, having been reflected by the second reflection unit 150, toward the filter 210.

The mirror 230 may reflect the white-based visible light, having been reflected by the second reflection unit 150, toward the diffuser 240.

The diffuser 240 may diffuse a visible light and provide the diffused visible light to the filter 210.

The diffuser 240 may diffuse white-based visible light reflected by the mirror 230.

By diffusing an incident visible light, the diffuser 240 may adjust intensity per unit area of light that flows into the filter 210 and the optical sensor 220.

Meanwhile, in some implementations, the structure 201 may include a hole 202 formed between the mirror 230 and the diffuser 240.

The hole 202 may allow only part of visible light reflected by the mirror 230 to be incident on the diffuser 240.

The lamp 10 may further include the processor 500.

The processor 500 may control each unit of the lamp 10 based on an electrical signal.

The processor 500 may be implemented using at least one of the following: application specific integrated circuits (ASICs), digital signal processors (DSPs), digital signal processing devices (DSPDs), programmable logic devices (PLDs), field programmable gate arrays (FPGAs), processors, controllers, micro-controller), microprocessors, and an electrical unit for performing other functions.

The processor 500 may control the light source 110 based on an electrical signal provided by the light sensing device 200.

The processor 500 may control the light source 110 based on a sensing value of the optical sensor 220.

The processor 500 may control the light source 110 by comparing a sensing value of a third optical sensor 223, a sensing values of the first optical sensor 221, and a sensing value of the second optical sensor 222 with one another.

The processor 500 may generate a reference value based on the sensing value of the third optical sensor 223.

For example, the processor 500 may generate a first reference value and a second reference value based on the sensing value of the third optical sensor 223.

The processor 500 may control the light source 110 by comparing a sensing value of the first optical sensor 221 with the first reference value.

For example, in the case where the sensing value of the first optical sensor 221 is determined to be equal to or less than the first reference value, the processor 500 may control the light source 110 so as not to emit laser light.

For example, in the case where the sensing value of the first light sensor 221 is determined to be equal to or less than the first reference value, the processor 500 may control intensity of laser light output from the light source 110 so as to be decreased.

The processor 500 may control the light source 110 by comparing a sensing value of the second optical sensor 222 with the second reference value.

For example, in the case where the sensing value of the second optical sensor 222 is determined to be equal to or greater than the second reference value, the processor 500 may control the light source 110 not to emit laser light.

For example, in the case where the sensing value of the second optical sensor 222 is determined to be equal to or greater than the second reference value, the processor 500 may control intensity of laser light emitted from the light source so as to be reduced.

In the case where first light is not being sensed by the first optical sensor 221 while second light is being sensed by the second optical sensor 222, the processor 500 may control the light source 110 so as not to emit laser light.

If at least one from among the lens 120, the first reflection unit 130, the reflective phosphor 140, and the second reflection unit 150 is damaged or a position thereof is changed, white-based visible light is not normally generated. If blue-based light is irradiated onto a human body, it may cause the person to lose vision. The present invention may prevent such problems in advance.

The lamp 10 may further include the projection lens 700.

The projection lens 700 may include a front surface 701, a rear surface 702, and a circumferential surface 703.

The front surface 701 of the projection lens 700 may be a convex curved surface toward the front of the projection lens 700.

The rear surface 702 of the projection lens 700 may be a flat surface.

The projection lens 700 may be symmetric about the optical axis X of the lens 120.

The lamp 10 may further include a lens holder 758 that supports the lens 120 and the projection lens 700.

The lamp 10 may further include a light reducer supporter 356 that supports the light reducer 300. The light reducer supporter 356 may be formed to surround the light reducer 300. The light reducer supporter 356 may be elongated in a direction parallel to the optical axis X of the lens 120, and a light passage through which light passes may be formed inside the light reducer supporter 356.

Each unit of the lamp 10 may be described as below, with reference to an optical path.

When the light source 110 is turned on by control of the processor 500, blue-based light may be output from the light source 110.

The light output from the light source 110 may be incident on the light reducer 300.

The light output from the light source 110 may be incident on a light-incident surface 311 of the first reducer lens 310.

A width of the light incident on the first reducer lens may be reduced.

The light whose width is reduced may be emitted to the light-emitting surface 312 of the first reducer lens 310.

The light emitted to the light-emitting surface 312 of the first reducer lens 310 may be incident on the light-incident surface 321 of the second reducer lens 320.

A width of the light incident on the second reducer lens 320 may be further reduced.

The light whose width is further reduced may be emitted to the light-emitting surface 322 of the second reducer lens 320.

The light emitted to the light-emitting surface 322 of the second reducer 320 may be incident on the rear surface 122 of the lens 120.

The light incident on the rear surface of the lens 120 may pass through the rear of the first reflection unit 130 and be then incident on the first reflection unit 130.

The light incident on the first reflection unit 130 may be reflected toward the reflective phosphor 140.

The light incident on the first reflection unit 130 may pass through the lens 120 and be then incident on the reflective phosphor 140.

A wavelength of the light incident on the reflective phosphor 140 may be changed by the reflective phosphor 140.

The light incident on the reflective phosphor 140 may be converted into white-based light and then emitted toward the lens 120.

The white-based light emitted from the reflective phosphor 140 may pass through the lens 120 and the projection lens 700 to be emitted to the outside of the vehicle.

The white-based light emitted to the outside of the vehicle may function as a low beam or a high beam from a head lamp.

Meanwhile, part of the light emitted from the reflective phosphor 140 to the lens 120 may be incident on the second reflection unit 150.

The light incident on the second reflection unit 150 from the reflective phosphor 140 may be reflected by the second reflection unit 150 toward the rear of the lens 120.

The light reflected by the second reflection unit 150 may be incident on the light sensing device 200.

The light reflected by the second reflection unit 150 may be reflected by the mirror 230.

The light reflected by the mirror 230 may be reflected and be then incident on the diffuser 240.

The light incident on the diffuser 240 may be diffused and be then incident on the first filter 211.

First light separated by the first filter 211 may be incident on the first optical sensor 221.

Meanwhile, second light separated by the first filter 211 may be incident on the second filter 212.

The second light separated by the second filter 212 may be incident on the second optical sensor 222.

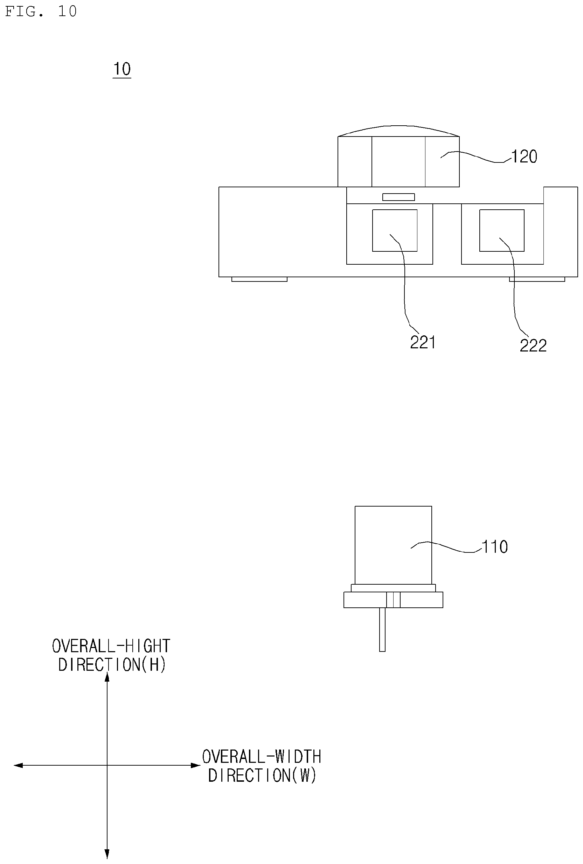

FIG. 10 is an example of a plan view of a lamp for a vehicle according to an embodiment of the present invention.

Referring to FIG. 10, the light source 110, the first optical sensor 221, and the lens 120 may be positioned along a straight line, as viewed from above.

The first optical sensor 221 and the second optical sensor 222 may be arranged on the same plane.

The first optical sensor 221 and the second optical sensor 222 may be arranged in parallel in the overall width direction.

As illustrated in FIG. 10, the second optical sensor 222 may be disposed on the right side of the first optical sensor 221 in a straight-forward direction of travel of the vehicle.

As illustrated in FIG. 6, the second optical sensor 222 may be disposed on the left side of the first optical sensor 221 in a straight-forward direction of travel of the vehicle.

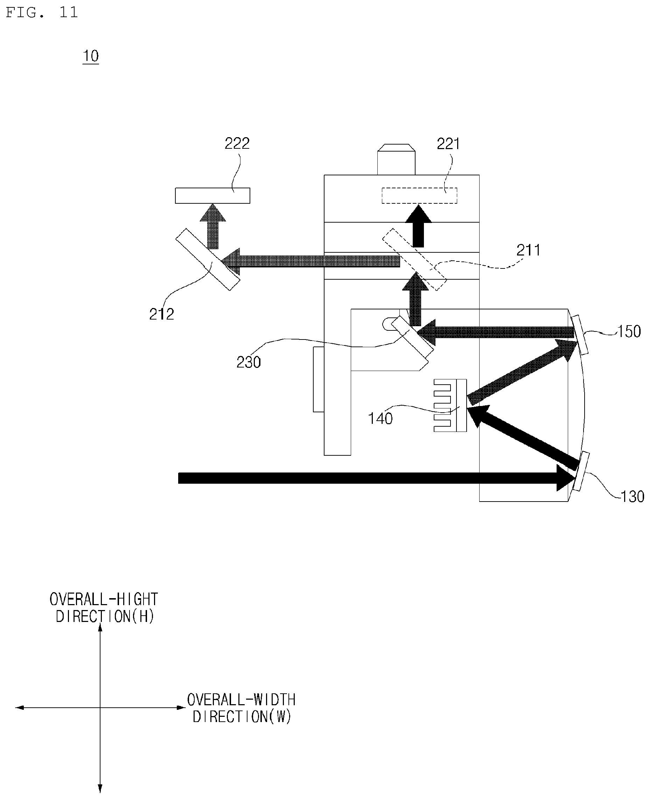

FIG. 11 is a side view of a lamp for a vehicle according to an embodiment of the present invention.

Referring to FIG. 11, the light source 110, the second optical sensor 222, the first optical sensor 221, and the lens 120 may be positioned along a straight line, as viewed from above.

The first optical sensor 221 and the second optical sensor 222 may be arranged on the same plane.

The first optical sensor 221 and the second optical sensor 222 may be arranged in parallel in the overall length direction.

As illustrated in FIG. 11, the second optical sensor 222 may be disposed behind the first optical sensor 221 in the straight-forward direction of travel of the vehicle.

In some implementations, the second optical sensor 222 may be disposed in front of the first optical sensor 221 in the straight-forward direction of travel of the vehicle.

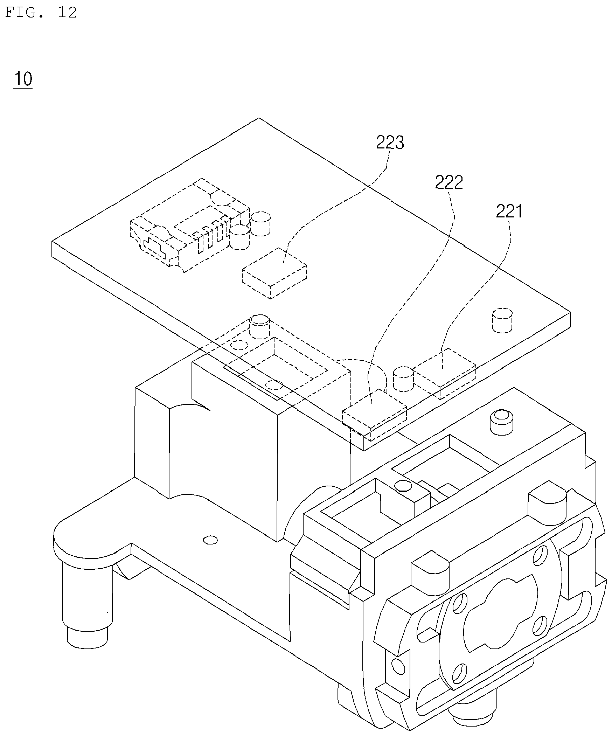

FIG. 12 is an example of a perspective view of a lamp for a vehicle according to an embodiment of the present invention.

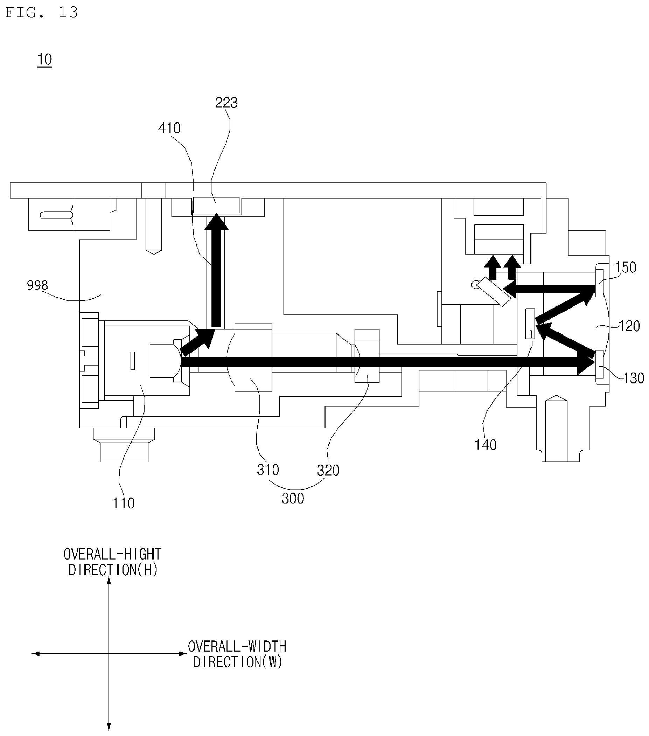

FIG. 13 is an example of a side sectional view of a lamp for a vehicle according to an embodiment of the present invention.

Referring to FIGS. 12 and 13, the lamp 10 may further include a first optical sensor 223.

The third optical sensor 223 may be classified as a subordinate element of the optical sensor 220.

The third optical sensor 223 may sense blue-based light output from the light source 110.

The third optical sensor 223 may output data about intensity of blue-based light as an electrical signal.

The data about intensity of the blue-based light sensed by the third optical sensor 223 may be referred to as a sensing value of the third optical sensor 223.

The third optical sensor 223 may include a photodiode (PD) .

The lamp may further include a housing 998.

The housing 998 may accommodate the light output device 100 and the light sensing device 200.

The lamp 10 may further include a light guide unit 410.

The light guide unit 410 may be formed inside the housing 998 as a body tube.

The light guide unit 410 may guide blue-based light, having been generated by the light source 110, to the third optical sensor 223.

The light guide unit 410 may be disposed between the light source 110 and the light reducer 300.

The above detailed description should not be construed as being limited to the embodiments set forth herein in all terms, but should be considered by way of example. The scope of the present invention should be determined by the reasonable interpretation of the accompanying claims and all changes in the equivalent range of the present invention are intended to be included in the scope of the present invention.

## Claims

1. A lamp (10) for a vehicle, comprising:
a light output device (100) configured to emit visible light based on laser light; and
a light sensing device (200) configured to sense the light,
wherein the light sensing device (200) comprises:
a filter (210) configured to separate light according to wavelengths, and
an optical sensor (220) configured to sense the light separated by the filter.

2. The lamp (10) according to claim 1,
wherein the filter (210) comprises:
a first filter (211) configured to separate first light from the visible light; and
a second filter (212) configured to separate second light from the visible light, and
wherein the optical sensor (220) comprises:
a first optical sensor (221) configured to sense the first light; and
a second optical sensor (222) configured to sense the second light.

3. The lamp (10) according to claim 2, wherein the first optical sensor (221) is arranged along a line (462) extending from an optical path (461) of the visible light.

4. The lamp (10) according to claim 3, wherein the second optical sensor (222) is arranged along a line (463) parallel to the optical path (461) of the visible light.

5. The lamp (10) according to any one of claims 2 to 4, wherein the second optical sensor (222) is disposed at a lateral side of or behind the first optical sensor (221).

6. The lamp (10) according to any one of claims 2 to 5, wherein the second filter (212) is disposed to face the first filter (211), being tilted at a same angle as the first filter (211) is tilted.

7. The lamp (10) according to any one of claims 2 to 6,
wherein the first filter (211) is further configured to separate yellow-based light from the visible light and provide the yellow-based light to the first optical sensor (221), and
wherein the second filter (212) is further configured to separate blue-based light from the visible light from which the yellow-based light has been separated, and provide the blue-based light to the second optical sensor (222).

8. The lamp (10) according to any one of claims 1 to 7, wherein the light output device (100) comprises:
a lens (120);
a light source (110) configured to generate the laser light;
a first reflection unit (130) configured to reflect the laser light toward the rear of the lens;
a reflective phosphor (140) disposed behind the lens and configured to convert a wavelength of light reflected by the first reflection unit and reflect the wavelength-converted light to the lens; and
a second reflection unit (150) configured to reflect part of the light reflected by the reflective phosphor toward the rear of the lens.

9. The lamp (10) according to claim 8, wherein the light output device (100) further comprises a light reducer (300) configured to shrink laser light output from the light source and emit the shrunk light to the first reflection unit.

10. The lamp (10) according to claim 8 or 9, further comprising a third optical sensor (223) configured to sense blue-based light output from the light source (110).

11. The lamp (10) according to claim 10, insofar as dependent upon claim 9, further comprising a light guide unit (410) configured to guide light generated by the light source (110) to the third optical sensor (223),
wherein the light guide unit (410) is disposed between the light source (110) and the light reducer (300).

12. The lamp (10) according to claim 10 or 11, insofar as dependent upon claim 2, further comprising a processor (500) configured to control the light source (110) by comparing a sensing value of the third optical sensor (223), a sensing value of the first optical sensor (221) and a sensing value of the second optical sensor (222).

13. The lamp (10) according to any one of claims 8 to 12, wherein the light sensing device (200) is disposed behind or above the second reflection unit (150).

14. The lamp (10) according to any one of claims 1 to 13, wherein the light sensing device (200) further comprises a mirror (230) configured to reflect the visible light toward the filter.

15. The lamp (10) according to any one of claims 1 to 14, further comprising a diffuser (240) configured to diffuse the visible light and provide the diffused light to the filter.
